(19) Europäisches Patentamt

European Patent Office

Office européen des brevets

(11) Publication number : **0 357 784 B1**

# (12) EUROPEAN PATENT SPECIFICATION

(45) Date of publication of patent specification :
02.09.92 Bulletin 92/36

(51) Int. Cl.⁵ : **A23K 1/18**, A23K 1/16

(21) Application number : **89901594.5**

(22) Date of filing : **19.01.89**

(86) International application number :
**PCT/JP89/00043**

(87) International publication number :
**WO 89/06497 27.07.89 Gazette 89/16**

(54) A FEED COMPOSITION FOR CULTURING FISHES AND SHELLFISHES.

(30) Priority : **23.01.88 JP 13300/88**

(43) Date of publication of application :
**14.03.90 Bulletin 90/11**

(45) Publication of the grant of the patent :
**02.09.92 Bulletin 92/36**

(84) Designated Contracting States :
**DE FR GB IT NL**

(56) References cited :
**WO-A-81/03262
AU-B- 495 075
American Journal of Physiology, Vol. 252, no.
1, 1987 R.K. Buddington et al.:"Pyloric ceca of
fish: a "new" absorptive organ"see pages
G65-G76, in particular G66-G67**

(73) Proprietor : **KYOWA HAKKO KOGYO CO., LTD.
Ohtemachi Bldg., 6-1 Ohtemachi I-chome
Chiyoda-ku Tokyo 100 (JP)**

(72) Inventor : **SUGA, Yoshito
2542, Oaza Fujimagari
Ube-shi Yamaguchi 755 (JP)**

(74) Representative : **Lambert, Hugh Richmond et
al
D. YOUNG & CO. 10 Staple Inn
London, WC1V 7RD (GB)**

## Description

The present invention relates to a feed composition for culturing fishes and shellfishes.

The art of culturing marine species, such as fish and shellfish, has seen some remarkable improvements in recent years. Fry of various species have successfully been bred both in fresh water and seawater, and the number of successful breeding programmes increases year by year. With these advances artificial synthetic feeds suitable for breeding and culturing fishes and shellfishes have been developed, including artificial synthetic feeds for culturing red sea bream, flatfish, sweetfish and Kuruma prawn.

Known sources of artificial synthetic feeds for fishes and shellfish include: fish meal, casein, squid meal and other animal materials, as well as soybean oil meal, wheat flour, alpha-starch, yeasts and other vegetable materials. Animal oils and fats, vegetable oils and fats, vitamins, minerals and antioxidizing agents are also frequently used. Moreover, and depending on the species to be cultured, amino acids such as alanine, glycine, methionine, threorine, tryptophan, lysine, glutamic acid, isoleucine and arginine may be added.

However, at the present time, such artificial synthetic feeds still present many problems with respect to the nutritional requirements of the fish. The vitality of fry grown on artificial feeds is often low, as well as the survival and growth rates. Thus many artificial feeds are not satisfactory for mass production of cultured fishes and shellfishes.

According to the present invention, an artificial synthetic feed is provided which can be fed to fry and cultured fishes to enhance their vitality, raise their survival rate and promote their growth. As its characteristic ingredient, this artificial synthetic feed comprises a di- and/or tri-peptide composed of amino acids selected from the group consisting of glycine, alanine, valine, methionine, serine and asparagine.

Any suitable di- arid/or tri-peptide composed of amino acids from the selected group can be used. Most preferably, a di-peptide or tripeptide is used wherein the amino acid residue at the N-terminal is alanine, glycine or methionine and the remaining amino acid(s) is or are from the selected group. The amino acids constituting the selected di-peptide or tri-peptide can be of either the L- or DL-type. Specific di-peptide examples are: glycyl-DL-alanine, glycyl-DL-valine, DL-alanyl-DL-methionine, DL-alanyl-DL-serine, DL-alanyl-L-asparagine and L-methionyl-glycine. Suitable tri-peptides include: glycyl-glycyl-glycine and DL-alanyl-glycyl-glycine. The di- and tri-peptides axe used alone or in combination.

The compositions of this invention will contain an artificial synthetic feed suitable for fishes and shellfishes, to which the di-peptide or tri-peptide can be added by simple mixing. Alternatively, the dipeptide or tri-peptide may be mixed first with some powdered artificial synthetic feed materials, and that mixture then added to the other materials to complete the feed composition of the present invention.

The amount of the di- and/or tri-peptide to be added to the artificial synthetic feed is arbitrary, but amounts of from 0.1 to 5% by weight, based on the artificial synthetic feed, are preferred.

As the artificial synthetic feed, animal materials such as fish meal, casein and squid meal can be used, as well as vegetable materials such as soybean oil meal, wheat flour, alpha-starch and yeast. Other suitable artificial feed components are animal oils and fats, vegetable oils and fats, vitamins, minerals, amino acids and antioxidizing agents.

The present invention also extends to a method of culturing fishes and shellfishes wherein the fry or juvenile fish are dipped at least once in water containing one or more of the above-mentioned di-or tri-peptides. The water used for this purpose may be fresh water, seawater, or brackish water depending on the species. Likewise the concentration of the di-peptide or tri-peptide in the water, the water temperature, and the dipping time, will depend on the fish or shellfish species being cultured. Generally, the concentration of the di-peptide and/or tri-peptide in the water will be in the range 0.01 to 100 ppm. Water temperatures may be in the range 8 to 30°C and are preferably adjusted to the optimum temperature for that particular species. Dipping time may vary from 5 minutes to 2 days so as to incorporate a sufficient amount of the di-peptide and/or tri peptide into the bodies of the fry or juvenile fish.

The fish and shellfish to which the present invention is applicable include, for example, red sea bream, striped beak-perch, bastard halibut, flatfish, yellowtail, striped jack, sweetfish, salmon, Kuruma prawn and swimming crab.

Certain specific embodiments of the invention are illustrated by the following representative examples.

## Example 1

An artificial synthetic feed comprising 57.5g of casein, 3g of a 1:1:1 amino acid mixture of threonine, leucine and isoleucine, 5g of dextrin, 5g of alpha-starch, 6g of a mineral mixture (McCollum salt), 6g of Halver's vitamin mixture, 4g of fish-liver oil, 5g of soybeanlecithin and 2g of vital gluten, was prepared by mixing the ingredients together. 0.5g of glycyl-DL-alanine was then added with stirring, followed by 6g of zein and 150ml of 60% ethanol aqueous solution. Stirring was continued at 15,000 rpm for 3 minutes, and the mixture then lyophilized to prepare a feed composition according to the present invention.

In separate experiments, the above procedure was repeated with each of glycyl-DL-valine, glycyl-glycyl-glycine, DL-alanyl-glycylglycine, DL-alanyl-DL-methionine, DL-alanyl-DL-serine, DL-alanyl-L-asparagine and L-methionyl-glycine to provide a total of 7 further feed compositions according to this invention.

Example 2

An artificial synthetic feed comprising 53.5g of squid meal, 2g of a 1:1 amino acid mixture of arginine and methionine, 19g of yeast, 3g of alpha-starch, 8g of a mineral mixture (McCollum salt.), 6g of Halver's vitamin mixture, 4g of fish-liver oil, 3g of soybean-lecithin and 2g of vital gluten, was prepared by mixing the ingredients together. 0.5g of glycyl-DL-alanine was then added with stirring. 30ml of water were then added, and the mixture kneaded for one minute. The mixture was then moulded (extruded) using a Wenger extruder to provide a moulded product which was then air-dried to provide a feed composition according to the present invention.

In separate experiments, the above procedure was repeated with each of glycyl-DL-valine, glycyl-glycyl-glycine, DL-alanyl-glycylglycine, DL-alanyl-DL-methionine, DL-alanyl-DL-serine, DL-alanyl-L-asparagine and L-methionyl-glycine to provide a total of 7 further feed compositions in accordance with this invention.

Example 3

Each of 11 groups of red sea bream fry, each group consisting of 20 individuals, was put into water in a 100 litre tank, and cultured for 30 days. During the culturing, various feed compositions prepared as in Example 1 were fed twice a day, in the morning and the afternoon. As controls, the same culturing and feeding procedures were carried out except that in the first control (A) the artificial synthetic feed of Example 1 contained no added di-peptide or tri-peptide, in the second control (B) a feed composition was used comprising the basic artificial synthetic feed of Example 1 with a 1:1 mixture of alanine and glycine, and in the third control (C) a feed composition was used comprising the basic artificial synthetic feed of Example 1 with a 1:1:1:1:1 amino acid mixture of alanine, glycine, valine, methionine and serine in place of the di- or tri-peptide.

The results of the culture are shown in Table 1.

## Table 1

| | | Average Weight (g) | | Weight Increase rate (%) | Survival Rate (%) |
|---|---|---|---|---|---|
| | | Start | 30 Days | | |
| **Control:** | A | 9.1 | 16.8 | 85 | 80 |
| | B | 9.0 | 16.8 | 87 | 80 |
| | C | 9.0 | 17.2 | 91 | 85 |
| **The Present Invention:** | | | | | |
| Glycyl-DL-alanine | | 9.3 | 18.5 | 99 | 100 |
| Glycyl-DL-valine | | 9.1 | 19.9 | 119 | 100 |
| Glycyl-glycyl-glycine | | 8.9 | 18.2 | 105 | 100 |
| DL-alanyl-glycyl-glycine | | 9.1 | 22.3 | 145 | 100 |
| DL-alanyl-DL-methionine | | 8.8 | 22.6 | 157 | 100 |
| DL-alanyl-DL-serine | | 9.0 | 25.6 | 184 | 100 |
| DL-alanyl-L-asparagine | | 8.9 | 20.0 | 125 | 100 |
| L-methionyl-glycine | | 8.6 | 17.7 | 106 | 100 |

Example 4

Example 3 was repeated except that flatfish fry were used in place of red sea bream fry.
The results of the culture are shown in Table 2.

4

## Table 2

| | | Average Weight (g) | | Weight Increase rate (%) | Survival Rate (%) |
|---|---|---|---|---|---|
| | | Start | 30 Days | | |
| **Control:** | A | 2.1 | 4.2 | 100 | 80 |
| | B | 2.0 | 4.0 | 100 | 80 |
| | C | 2.0 | 4.2 | 110 | 90 |
| **The Present Invention:** | | | | | |
| Glycyl-DL-alanine | | 2.0 | 4.8 | 140 | 100 |
| Glycyl-DL-valine | | 2.1 | 4.9 | 133 | 100 |
| Glycyl-glycyl-glycine | | 1.9 | 4.4 | 132 | 100 |
| DL-alanyl-glycyl-glycine | | 2.1 | 5.3 | 152 | 100 |
| DL-alanyl-DL-methionine | | 1.9 | 5.2 | 174 | 100 |
| DL-alanyl-DL-serine | | 2.0 | 6.0 | 200 | 100 |
| DL-alanyl-L-asparagine | | 1.9 | 4.4 | 132 | 100 |
| L-methionyl-glycine | | 1.9 | 4.3 | 126 | 100 |

### Example 5

Each of 7 groups of striped beak-perch fry, each group consisting of 20 individuals, was put into water in a 100 litre tank, and cultured for 30 days. During the culturing, 4 varieties of feed composition prepared as in Example 1 and as identified in Table 3 were fed twice a day, in the morning and the afternoon. As controls, the same culturing and feeding procedures were carried out except that in the first control (A) the artificial synthetic feed of Example 1 was used containing no added di-peptide or tri-peptide, in the second control (B) a feed composition was used comprising the basic artificial synthetic feed of Example 1 with a 1:1 amino acid mixture of alanine and glycine, and in the third control (C) a feed composition was used comprising the basic artificial synthetic feed of Example 1 and a 1:1:1:1:1 amino acid mixture of alanine, glycine, valine, methionine and serine in place of the di- or tri-peptide.

The results of the culture are shown in Table 3.

EP 0 357 784 B1

## Table 3

| | | Average Weight (g) | | Weight Increase rate (%) | Survival Rate (%) |
|---|---|---|---|---|---|
| | | Start | 30 Days | | |
| **Control:** | A | 22.5 | 34.5 | 53.3 | 100 |
| | B | 22.7 | 35.1 | 54.6 | 100 |
| | C | 22.8 | 35.3 | 54.8 | 100 |
| **The Present Invention:** | | | | | |
| Glycyl-DL-valine | | 22.0 | 36.0 | 63.6 | 100 |
| DL-alanyl-glycyl-glycine | | 22.5 | 39.5 | 75.6 | 100 |
| DL-alanyl-DL-methionine | | 22.0 | 36.5 | 65.0 | 100 |
| DL-alanyl-DL-serine | | 22.8 | 42.0 | 85.1 | 100 |

Example 6

Each of 11 groups of Kuruma prawn larvae, each group consisting of 100 individuals, was put into water in a 40 litre double bottom tank, and cultured for 30 days. During the culture, the various feed compositions prepared as in Example 2, and amounting to 4-5% of the total weight of the larvae, were fed once a day, in the evening. Next morning, any left.over feed composition was removed by siphon. As controls, the same culturing and feeding procedures were carried out except that in the first control (A), the artificial synthetic feed of Example 2 was used but containing no di-peptide or tri-peptide, in the second control (B) the same basic artificial synthetic feed of Example 2 was used but with a 1:1 mixture of alanine and glycine, and in the third control (C) the same basic artificial synthetic feed of Example 2 was used but. containing a 1:1:1:1:1 amino acid mixture of alanine, glycine, valine, methionine and serine in place of the di- or tripeptide.

The results of the culture are shown in Table 4.

6

## Table 4

| | | Average Weight (g) | | Weight Increase rate (%) | Survival Rate (%) |
|---|---|---|---|---|---|
| | | Start | 30 Days | | |
| **Control:** | A | 1.1 | 3.2 | 191 | 78 |
| | B | 1.0 | 3.0 | 200 | 80 |
| | C | 1.0 | 3.3 | 230 | 85 |
| **The Present Invention:** | | | | | |
| Glycyl-DL-alanine | | 1.1 | 3.8 | 245 | 98 |
| Glycyl-DL-valine | | 1.1 | 3.9 | 255 | 97 |
| Glycyl-glycyl-glycine | | 1.0 | 4.3 | 330 | 100 |
| DL-alanyl-glycyl-glycine | | 1.1 | 4.8 | 336 | 100 |
| DL-alanyl-DL-methionine | | 1.0 | 5.2 | 420 | 100 |
| DL-alanyl-DL-serine | | 1.0 | 5.5 | 450 | 100 |
| DL-alanyl-L-asparagine | | 1.0 | 4.4 | 340 | 98 |
| L-methionyl-glycine | | 1.0 | 4.4 | 340 | 100 |

## Claims

1. An artificial synthetic feed composition for culturing fishes and shellfishes, characterised in that it contains as an additive therein a di- and/or tri-peptide composed of amino acids selected from the group consisting of glycine, alanine, valine, methionine, serine and asparagine.

2. A feed composition according to claim 1, characterised in that the additive comprises a di-peptide and/or tri-peptide having at the N-terminal an amino acid residue derived from alanine, glycine or methionine.

3. A feed composition according to claim 1, characterised in that the additive is one or more of: glycyl-DL-alanine, glycyl-DL-valine, DL-alanyl-DL-methionine, DL-alanyl-DL-serine, DL-alanyl-L-asparagine, L-methionyl-glycine, glycyl-glycyl-glycine and DL-alanyl-glycyl-glycine.

4. A feed composition according to any one of claims 1 to 3, characterised in that the composition contains from 0.1 to 58 by weight of the di- and/or tri-peptide based on the weight of the artificial synthetic feed.

5. A method of culturing fish or shellfish, characterised in that the fish or shellfish are cultured on an artificial synthetic feed as claimed in any one of claims 1 to 4.

6. A method according to claim 5, as applied to the culture of fish and shellfish selected from the group consisting of red sea bream, striped beak-perch, bastard halibut, flatfish, yellowtail, striped jack, sweetfish, salmon, Kuruma prawn and swimming crab.

7. A method of culturing fish or shellfish, characterised in that the fry or juvenile fish are dipped at least once during the culture in water containing a di-peptide and or tri-peptide as defined in any one of claims 1 to 3.

8. A method according to claim 7, characterised in that the concentration of the di-peptide and/or tri-peptide in the water is 0.01 to 100 ppm.

9. A method according to claim 7 or 8, as applied to the culture of fish or shellfish selected from the group consisting of red sea bream, striped beak-perch, bastard halibut, flatfish, yellowtail, striped jack, sweetfish, salmon, Kuruma prawn and swimming crab.

## Patentansprüche

1. Künstliches synthetisches Futtermittel zum Züchten von Fischen und Schalentieren, dadurch gekennzeichnet, daß es als Zusatz ein Di- und/oder Tripeptid enthält, das sich aus den unter Glycin, Alanin, Valin, Methionin, Serin und Asparagin ausgewählten Aminosäuren zusammensetzt.

2. Futtermittel nach Anspruch 1, dadurch gekennzeichnet, daß der Zusatz ein Di- und/oder Tripeptid enthält, das am N-Terminus einen von Alanin, Glycin oder Methionin abgeleiteten Aminosäurerest aufweist.

3. Futtermittel nach Anspruch 1, dadurch gekennzeichnet, daß der Zusatz aus einer oder mehreren der folgenden Verbindungen besteht: Glycyl-DL-Alanin, Glycyl-DL-Valin, DL-Alanyl-DL-Methionin, DL-Alanyl-DL-Serin, DL-Alanyl-L-Asparagin, L-Methionyl-Glycin, Glycyl-Glycyl-Glycin und DL-Alanyl-Glycyl-Glycin.

4. Futtermittel nach einem der Ansprüche 1 bis 3, dadurch gekennzeichnet, daß das Futtermittel von 0,1 bis 5 Gew.% des Di- und/oder Tripeptids, bezogen auf das Gewicht des künstlichen synthetischen Futters, enthält.

5. Verfahren zum Züchten von Fischen oder Schalentieren, dadurch gekennzeichnet, daß die Fische oder Schalentiere mit einem künstlichen synthetischen Futtermittel nach einem der Ansprüche 1 bis 4 gezüchtet werden.

6. Auf die Zucht von Fischen oder Schalentieren angewandtes Verfahren nach Anspruch 5, wobei es sich bei den Fischen oder Schalentieren um Seekarpfen (red sea bream), gestreiften Schnabelbarsch (striped beakperch), Hirami (bastard halibut), Plattfisch (flatfish), Bernsteinfisch (yellowtail), gestreifte Bastardmakrele (striped jack), Rotzunge (sweetfish), Lachs (salmon), Kuruma-Garnele (Kuruma prawn) oder Schwimmkrabbe (swimming crab) handelt.

7. Verfahren zum Züchten von Fischen oder Schalentieren, dadurch gekennzeichnet, daß die Fischbrut oder der Jungfisch mindestens einmal während des Züchtens in Wasser getaucht wird, das ein Dipeptid und/oder Tripeptid, wie es in einem der Ansprüche 1 bis 3 definiert ist, enthält.

8. Verfahren nach Anspruch 7, dadurch gekennzeichnet, daß die Konzentration des Dipeptids und/oder Tripeptids im Wasser 0,01 bis 100 ppm beträgt.

9. Auf die Zucht von Fischen oder Schalentieren angewandtes Verfahren nach Anspruch 7 oder 8, wobei es sich bei den Fischen oder Schalentieren um Seekarpfen (red sea bream), gestreiften Schnabelbarsch (striped beak-perch), Hirami (bastard halibut), Plattfisch (flatfish), Bernsteinfisch (yellowtail), gestreifte Bastardmakrele (striped jack), Rotzunge (sweetfish), Lachs (salmon), Kuruma-Garnele (Kuruma prawn) oder Schwimmkrabbe (swimming crab) handelt.

## Revendications

1. Composition d'aliment synthétique artificiel pour la culture ou l'élevage des poissons, mollusques et crustacés, caractérisée en ce qu'elle contient, comme adjuvant, un dipeptide et/ou un tripeptide composés d'acides aminés choisis dans le groupe constitué par la glycine, l'alanine, la valine, la méthionine, la sérine et l'asparagine.

2. Composition d'aliment conforme à la revendication 1, caractérisée en ce que l'adjuvant comprend un dipeptide et/ou un tripeptide comportant, à l'extrémité N-terminale, un résidu d'acide aminé dérivé de l'alanine, de la glycine ou de la méthionine.

3. Composition d'aliment conforme à la revendication 1, caractérisée en ce que l'adjuvant est constitué d'un ou plusieurs des peptides suivants : glycyl-DL-alanine, glycyl-DL-valine, DL-alanyl-DL-méthionine, DL-alanyl-DL-sérine, DL-alanyl-L-asparagine, L-méthionyl-glycine, glycyl-glycyl-glycine et DL-alanyl-glycyl-glycine.

4. Composition d'aliment conforme à l'une quelconque des revendications 1 à 3, caractérisée en ce que la composition contient de 0,1 à 5 % en poids de dipeptide et/ou tripeptide, par rapport au poids de l'aliment synthétique artificiel.

5. Procédé de culture ou d'élevage de poissons, mollusques ou crustacés, caractérisé en ce que les poissons, mollusques ou crustacés sont nourris d'un aliment synthétique artificiel conforme à l'une quelconque des revendications 1 à 4.

6. Procédé conforme à la revendication 5, appliqué à la culture ou à l'élevage de poissons, mollusques et crustacés choisis dans le groupe constitué par les daurade, perche à bec rayée, flétan de Californie, poissons plats, poissons à queue jaune, caranx rayé, ayu, saumons, crevette de Kuruma et crabes portunidés.

7. Procédé de culture ou d'élevage de poissons, mollusques ou crustacés, caractérisé en ce que le fretin, le naissain ou les alevins sont plongés, au moins une fois au cours de la culture ou de l'élevage, dans de l'eau contenant un dipeptide et/ou un tripeptide tels que définis dans l'une quelconque des revendications 1 à 3.

8. Procédé conforme à la revendication 7, caractérisé en ce que la concentration de dipeptide et/ou tripeptide dans l'eau vaut de 0,01 à 100 ppm.

9. Procédé conforme à la revendication 7 ou 8, appliqué à la culture de poissons, mollusques et crustacés choisis dans le groupe constitué par les daurade, perche à bec rayée, flétan de Californie, poissons plats, poissons à queue jaune, caranx rayé, ayu, saumons, crevette de Kuruma et crabes portunidés.